# FASCICULE DE BREVET EUROPEEN

(11) **EP 1 430 299 B1**
(45) Date de publication et mention de la délivrance du brevet: **08.11.2017**
(21) Numéro de dépôt: 02774930.8
(22) Date de dépôt: 26.09.2002
(51) Int. Cl.: G01N 29/06, G01N 29/26, G01S 15/89

(54) **DISPOSITIF D'ANALYSE DE LA STRUCTURE D'UN MATERIAU**
VORRICHTUNG ZUR STRUKTURANALYSE EINES MATERIALS
DEVICE FOR ANALYSING THE STRUCTURE OF A MATERIAL

(30) Priorité: 28.09.2001 FR 0112516
(43) Date de publication de la demande: 23.06.2004
(73) Titulaire: Socomate International, 77580 Crecy La Chapelle (FR)
(72) Inventeur: COPERET, Philippe, F-77700 Coupvray (FR)
(74) Mandataire: Cabinet Plasseraud
(86) Numéro de dépôt international: PCT/FR2002/003283
(87) Numéro de publication internationale: WO 2003/029808

(56) Documents cités:
- EP-A2- 0 335 578
- US-A- 3 936 791
- US-A- 4 815 043
- US-A- 5 457 996
- US-A- 5 487 306
- MALLART R.: "IMPROVED IMAGING RATE THROUGH SIMULTANEOUS TRANSMISSION OF SEVERAL ULTRASOUND BEAMS", ROCEEDINGS OF THE SPIE, SPIE, BELLINGHAM, VA, US, vol. 1733, 1992, pages 120-130, XP007903874,

## Description

L'invention concerne les dispositifs d'analyse de la structure d'un matériau.

Plus précisément l'invention concerne les dispositifs d'analyse de la structure d'un matériau, selon le préambule de la revendication 1:
- une sonde comportant une pluralité d'éléments de sonde pour l'émission d'une onde, dans le matériau, avec une loi de retard d'émission correspondant à une déviation selon une direction et une focalisation de cette onde, et la réception, en parallèle sur les différents éléments de sonde, de signaux provenant de la réfraction de cette onde par le matériau,
- une pluralité d'émetteurs, chaque émetteur excitant un unique élément de sonde,
- une pluralité de voies de détection, chaque voie de détection étant connectée à un élément de sonde, pour recueillir les signaux de réfraction et les transmettre à des moyens de traitement de données,
- une pluralité de circuits de retard, chaque circuit de retard appliquant un retard, sur chaque voie de détection, selon une loi de retard de réception prédéterminée correspondant à la déviation de l'onde émise.

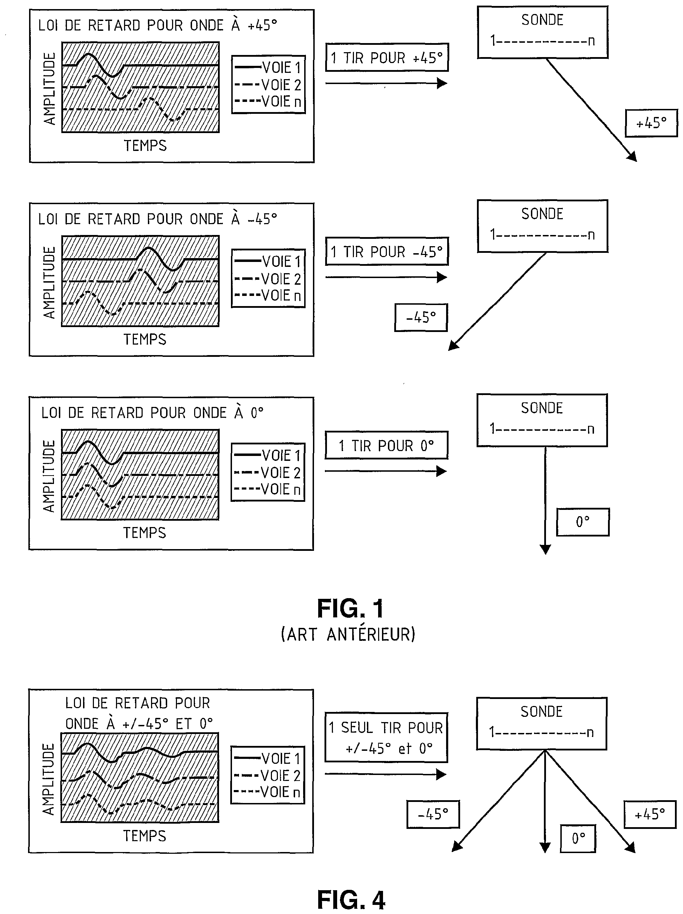

On connaît déjà de tels dispositifs d'analyse. Ils sont couramment utilisés de manière séquentielle, comme illustré par la figure 1. MALLART R: "IMPROVED IMAGING RATE THROUGH SIMULTANEOUS TRANSMISSION OF SEVERAL ULTRASOUND BEAMS" PROCEEDINGS OF THE SPIE, SPIE, BELLINGHAM, VA, US, vol. 1733, 1992, pages 120-130, divulgue un tel dispositif d'analyse de la structure d'un matériau.

L'analyse s'effectue alors en réalisant un tir, c'est-à-dire l'émission d'une onde par l'ensemble des éléments de sonde selon une déviation donnée, pour chaque déviation d'exploration souhaitée. Chaque déviation correspond à une loi de retard distincte. Le matériau est exploré ligne par ligne au moyen d'un faisceau mobile, la ligne d'exploration étant déplacée entre chaque tir.

Dans ces conditions, le temps nécessaire à la constitution d'une image croit avec la résolution spatiale exigée, avec le temps de parcours de l'onde dans l'objet analysé et avec la résolution de l'image reconstituée. Les dispositifs d'analyse de ce type ne permettent pas en pratique de dépasser quelques centaines de Hertz de cadence d'images, ce qui est très insuffisant dans de nombreuses applications telles que le contrôle de tôles, de tubes, de rails en voie, etc.

Un but de l'invention est de pallier cet inconvénient.

Ce but est atteint, selon l'invention, par un dispositif d'analyse selon la revendication 1, dans lequel chaque élément de sonde émet l'onde avec au moins une autre loi de retard d'émission correspondant à l'émission de l'onde selon au moins une autre déviation, simultanément, et les circuits de retard appliquent des retards, sur chaque voie de détection, selon au moins une autre loi de retard de réception, prédéterminée et correspondant à la réception de l'onde émise selon l'autre déviation. En effet, les lois de retard d'émission et de réception utilisées dans le dispositif selon l'invention correspondent à une pluralité de déviations qui auraient, avec les dispositifs de l'art antérieur, nécessité autant de tirs que de déviations, alors que le dispositif de l'invention analyse le matériau selon différentes déviations, en simultané, en un seul tir.

Dans des modes de réalisation préférés du dispositif selon l'invention, on a recours à l'une et/ou à l'autre des dispositions suivantes :
- il comporte des moyens de pilotage des circuits de retard aptes à piloter les circuits de retard pour traiter chaque onde selon une focalisation variant en fonction du temps ;
- il comporte des moyens de numérisation du signal recueilli par chacune des voies de détection, avec une fréquence d'échantillonnage comprise entre deux et cinq fois la fréquence d'émission des éléments de sonde, et préférentiellement sensiblement égale à trois fois la fréquence d'émission des éléments de sonde ;
- il comporte un interpolateur numérique à sorties parallèles pour multiplier la résolution temporelle du signal recueilli par chacune des voies de détection ;
- il comporte un amplificateur linéaire pour amplifier l'amplitude de l'onde avant son émission par les éléments de sonde ; et
- les éléments de sonde sont agencés selon une disposition choisie parmi une disposition linéaire, une disposition matricielle et une disposition circulaire. Un procédé d'analyse de la structure d'un matériau comprenant :
   - l'émission d'une onde composite constituée d'une pluralité de signaux émis par une sonde comportant une pluralité d'éléments de sonde, avec une loi de retard d'émission correspondant à une déviation selon une direction et une focalisation de cette onde,
   - la réception, en parallèle, par les éléments de sonde, de signaux provenant de la réfraction de l'onde, par le matériau,
   - la transmission, par une pluralité de voies de détection, des signaux reçus par les éléments de sonde, vers des moyens de traitement de données,
   - l'application d'un retard par des circuits de retard, en parallèle sur chaque voie de détection, selon une loi de retard de réception, prédéterminée et correspondant à la déviation de l'onde émise, le procédé comporte en outre l'émission d'au moins une autre onde, selon une autre déviation, correspondant à une autre loi de retard, l'émission de chaque onde étant effectuée de manière simultanée, et par le fait que la loi de retard correspond à l'émission simultanée des différentes ondes, respectivement selon chacune des déviations.

Dans des modes de mise en oeuvre préférés du procédé on a recours à l'une et/ou à l'autre des dispositions suivantes :
- il comporte une numérisation des signaux transmis par chaque voie de réception, avec une fréquence d'échantillonnage comprise entre deux et cinq fois la fréquence d'émission des éléments de sonde, et préférentiellement sensiblement égale à trois fois la fréquence d'émission des éléments de sonde ; et
- il comporte successivement les étapes selon lesquelles :
   - un premier retard est appliqué à chaque signal correspondant à une voie de détection,
   - plusieurs signaux correspondant à un groupe d'éléments de sonde sont sommés,
   - un deuxième retard est appliqué pour chaque groupe, à chaque signal résultant de la sommation précédente, et
   - les signaux retardés correspondant aux différents groupes sont sommés ;
- au moins deux zones différentes de la sonde, comportant chacune une pluralité d'éléments de sonde, balayent simultanément le matériau, selon toutes les déviations également simultanément ;
- les signaux reçus par les différents élément de sonde sont traités, à mesure de leur réception, en continu, par les circuits de retard ; et
- les signaux reçus par les différents élément de sonde sont mémorisés pour être traités en différé par les circuits de retard.

D'autres aspects, buts et avantages de l'invention apparaîtront à la lecture de la description détaillée qui suit d'un de ses modes de réalisation.

L'invention sera également mieux comprise à l'aide des références aux dessins sur lesquels :
- la figure 1 représente schématiquement les différentes étapes mises en oeuvre, avec un procédé de l'art antérieur, pour obtenir une analyse d'un matériau, selon trois déviations différentes ;
- la figure 2 est un synoptique général d'un mode de réalisation du dispositif selon l'invention ;
- la figure 3 est un synoptique d'un module de base du mode de réalisation du dispositif selon l'invention représenté sur la figure 2 ; et
- la figure 4 illustre schématiquement la correspondance entre lois de retard et déviations de l'onde émise par le dispositif correspondant aux figures 2 et 3.

Un exemple de mode de réalisation du dispositif selon l'invention est présenté ci-dessous.

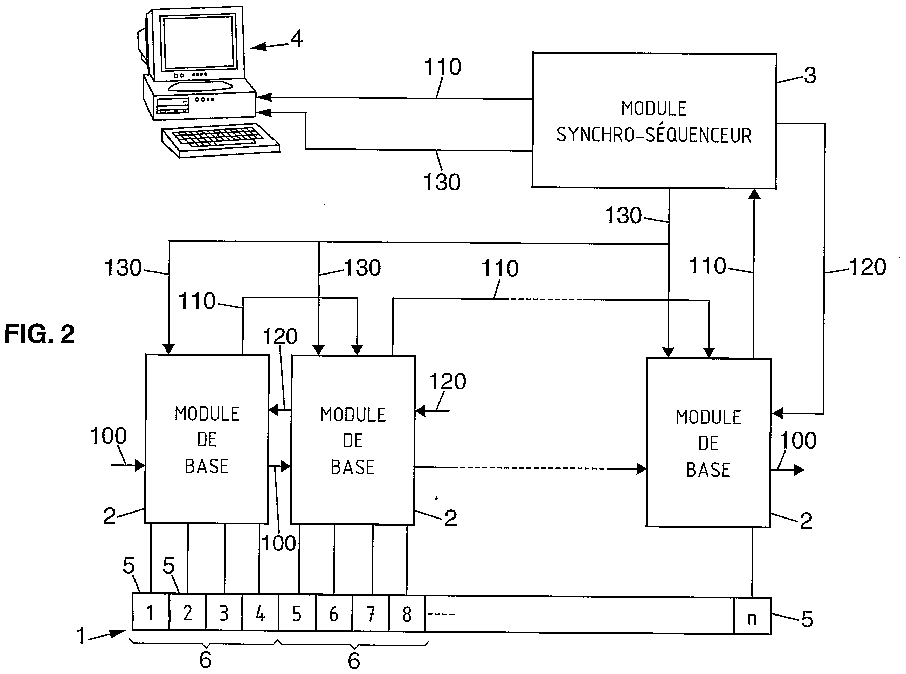

Selon cet exemple, le dispositif selon l'invention, représenté sur la figure 2, comporte une sonde 1, des modules de base 2, un module synchro-séquenceur 3 et des moyens de traitement de données 4. Les moyens de traitement 4 sont avantageusement constitués d'un micro-ordinateur.

La sonde 1 est constituée de n éléments de sonde 5. Ce nombre n est fonction de l'application souhaitée et/ou des limites technologiques de fabrication. A titre d'exemple, n = 128. Ces n éléments de sonde 5 sont répartis par groupe 6 de quatre éléments de sonde 5 consécutifs, répartis sur la sonde 1. Chaque groupe 6 est traité par un module de base 2.

Chaque élément de sonde 5 permet d'émettre un signal ultrasonore dans un matériau et de détecter, en retour, le signal réfracté par ce matériau. Avantageusement, chaque élément de sonde 5 est du type piézo-composite.

Un module de base 2 communique avec le module de base 2 suivant par l'intermédiaire d'un bus de sommation 100 des cinq déviations gérées par chaque module de base 2.

Les données recueillies par chaque module de base 2 sont transférées au module de base 2 suivant par l'intermédiaire d'un bus de données 110 constitué d'une ligne série à haut débit. Le dernier module de base 2 transfère l'ensemble des données obtenues aux moyens de traitement de données 4, via le module synchro-séquenceur 3, également par l'intermédiaire d'un bus de données 110, constitué d'une ligne série à haut débit.

Le module synchro-séquenceur 3 a pour principale fonction d'interfacer les modules de base 2 et les moyens de traitement 4 et de générer des signaux de synchronisation à partir d'horloges internes ou externes, pour les transmettre aux modules de base 2 par l'intermédiaire d'un bus de synchronisation 120. En particulier, l'interfaçage entre les modules de base 2 et les moyens de traitement 4 comporte :
- le stockage des données détectées, dans une mémoire tampon, via un désérialiseur qui récupère ces données, provenant des modules de base 2, sur le bus de données 110 ;
- la gestion des transferts de ces données vers les moyens de traitement 4 via des interfaces appropriées ; et
- le paramétrage des différents modules de base 2, à partir des données en provenance des moyens de traitement de données 4.

Les moyens de traitement de données 4 communiquent avec chaque module de base 2, via le module synchro-séquenceur 3, par l'intermédiaire d'un bus de réglage et de configuration 130.

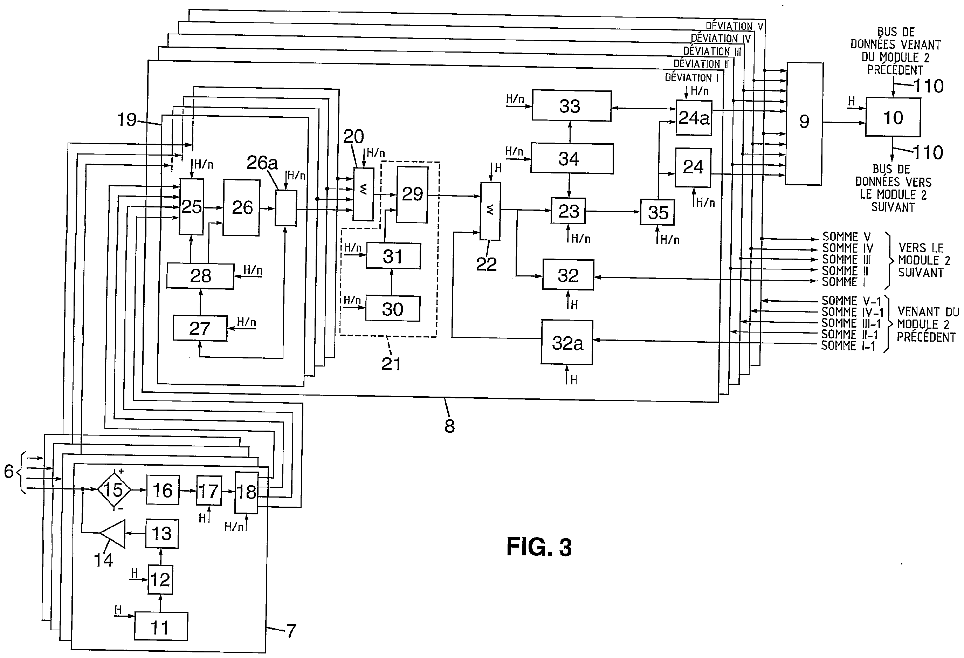

Un module de base 2 est représenté de manière plus détaillée sur la figure 3. Chaque module de base 2 comporte des moyens d'émission et de réception 7, des circuits de retard 8, un processeur 9 et un multiplexeur de transfert 10.

Chaque module de base 2 comporte quatre fois des moyens d'émission et de réception 7, c'est-à-dire une fois par élément de sonde 5.

Chaque module de base 2 comporte cinq fois des circuits de retard 8, c'est-à-dire une fois par déviation.

Pour chaque élément de sonde 5, les moyens d'émission et de réception 7 comprennent, pour l'émission, une mémoire émetteur 11, un convertisseur digital-analogique 12, un filtre basse-bas analogique 13 et un amplificateur 14.

Les moyens d'émission et de réception 7 comportent également, pour chaque élément de sonde 5, pour la réception, un écrêteur 15, un filtre analogique 16, un convertisseur analogique numérique 17 et un premier interpolateur 18 numérique à sorties parallèles.

Chaque module de base 2 a pour fonction de gérer les quatre éléments de sonde 5 d'un groupe 6, ainsi que l'émission d'une onde composée correspondant à cinq déviations I à V différentes émises par chaque élément de sonde 5 d'un groupe 6.

La gestion, par chaque module de base 2, des éléments de sonde 5 comporte, en particulier :
- l'émission d'ultrasons,
- la détection de signaux ultrasonores,
- la conversion analogique/numérique des signaux détectés, et
- l'interpolation numérique des signaux détectés, de manière à accroître la résolution temporelle.

Pour l'émission, des courbes d'émission sont calculées en phase d'initialisation du dispositif selon l'invention, avec une précision dix fois supérieure à la résolution souhaitée. Chaque courbe est constituée de la somme, selon des lois de retard d'émission, des courbes nécessaires pour chacune des cinq déviations prédéterminées du faisceau ultrasonore émis par un groupe 6 donné. La figure 4 illustre, pour trois déviations (0 et plus ou moins 45 degrés) la forme de la loi de retard, c'est-à-dire l'amplitude du signal émis par chaque élément de sonde 5 en fonction du temps. Ces courbes prennent également en compte les coefficients d'apodisation à l'émission destinés à réduire les lobes secondaires dus à l'échantillonnage spatial de la sonde 1.

Ces courbes d'émission sont échantillonnées à une fréquence système H. Les courbes échantillonnées correspondantes sont alors chargées dans chaque mémoire émetteur 11.

Ainsi, par exemple, pour une sonde de 20MHz, la précision du calcul des courbes doit être de 0,5 nano-secondes. La fréquence d'échantillonnage H peut, quant à elle, être limitée à environ trois fois la fréquence de la sonde 1, soit 60MHz. Ceci est suffisant pour une reconstruction correcte du signal et présente l'avantage de limiter les ressources matérielles et donc le coût du dispositif selon l'invention. Le fait de travailler avec une fréquence système H la plus basse possible permet d'obtenir de grands retards avec un minimum de ressources matérielles.

En phase de tir, c'est-à-dire en phase d'émission de l'onde par la sonde 1, chaque mémoire émetteur 11 est relue à la fréquence d'échantillonnage H. Les données numériques correspondantes aux courbes d'émission enregistrées dans chaque mémoire émetteur 11 d'une voie correspondant à un élément de sonde 5 donné, sont converties, également à la fréquence d'échantillonnage H, après leur relecture, en signaux analogiques par le convertisseur digital-analogique 12 de la même voie. Le signal analogique obtenu est alors filtré par le filtre basse-bas analogique 13 correspondant, de manière à rejeter les composantes haute fréquence dues à l'échantillonnage. Le signal filtré est ensuite amplifié par l'amplificateur 14 correspondant. Cet amplificateur 14 est un amplificateur linéaire de puissance permettant de fournir l'énergie nécessaire à l'excitation d'un élément de sonde 5.

Les signaux émis par les différents éléments de sonde 5 dans le matériau sont réfractés par celui-ci. Ces signaux réfractés sont recueillis par chaque élément de sonde 5. L'écrêteur 15 protège les éléments de circuit 16, 17, 18 en entrée des signaux recueillis. Puis le filtre analogique 16 filtre les signaux afin de ne laisser passer que les composantes fréquentielles de la bande utile. Enfin, ils sont convertis, à la fréquence H/n, par le convertisseur analogique-numérique 17, avec une dynamique minimum de 14 bits. Ceci permet d'obtenir une dynamique d'entrée suffisante pour éviter toute commande de gain analogique à l'entrée, ainsi que tout phénomène de saturation. Cette dynamique est également suffisante pour traiter n'importe laquelle des déviations.

Le premier interpolateur 18 effectue, sur le signal en sortie du convertisseur analogique numérique 17, une interpolation par filtrage numérique, de façon à obtenir la résolution temporelle nécessaire à la précision du retard souhaité pour effectuer les différentes déviations envisagées. En effet, la fréquence système H est, comme nous l'avons vu précédemment, égale à environ trois fois la fréquence de la sonde 1. Ce qui ne serait pas suffisant pour obtenir la résolution nécessaire sur des premières cellules de retard 19 constitutives des circuits de retard 8 et situées en aval du convertisseur analogique-digital 17, car cette résolution est fixée au dixième de la longueur d'onde. Mais le premier interpolateur 18 permet de résoudre ce problème en multipliant par quatre la résolution temporelle, sans augmenter la fréquence système H. Ainsi, pour une sonde de 20MHz et une fréquence système de 60MHz, la résolution des circuits de retard des circuits de retard 8 est de l'ordre de quatre nano-secondes.

Les circuits de retard 8 comprennent, pour chaque déviation I à V, une première cellule de retard 19, un premier sommateur 20, une deuxième cellule de retard 21, un deuxième sommateur 22, ainsi qu'un circuit multiplieur 23 et des modules de traitement pour exploitation 24, 24a.

Les circuits de retard 8 gèrent, en particulier:
- l'application, en parallèle sur l'ensemble des signaux détectés, des retards selon des lois de retard de réception correspondant aux différentes déviations souhaitées,
- des pondérations par des coefficients d'apodisation,
- la sommation numérique en temps réel des différents signaux retardés et pondérés, afin de générer les signaux correspondant aux différentes déviations souhaitées ; et
- l'application d'un gain aux signaux retardés, pondérés et sommés.

En sortie du premier interpolateur 18, pour chaque élément de sonde 5 et pour chacun des circuits de retard 8, la première cellule de retard 19 gère les retards dans un groupe 6 de quatre éléments de sonde 5.

Chaque première cellule de retard 19 est constituée d'un multiplexeur 25, d'un premier circuit tampon circulaire 26 et d'un premier circuit diviseur 26a. Le multiplexeur 25 sélectionne les signaux issus des moyens d'émission et de réception 7 pour chaque élément de sonde 5 avec la résolution du dixième de longueur d'onde. Le circuit tampon circulaire 26 applique un retard à chaque signal sélectionné. Le circuit tampon circulaire 26 permet d'obtenir des retards de plusieurs longueurs d'onde en travaillant à la fréquence H/n. Le premier circuit diviseur 26a réalise une une apodisation en réception qui réduit les lobes secondaires dus à l'échantillonnage spatial de la sonde 1.

La première cellule de retard 19 est pilotée dynamiquement à l'écriture par un premier circuit mémoire 27 et un deuxième interpolateur 28. Le premier circuit mémoire 27 stocke, en phase d'initialisation, les points caractéristiques de la courbe de retard de l'élément de sonde 5 correspondant. Le deuxième interpolateur 28 régénère les points intermédiaires à ces points caractéristiques.

La première cellule de retard 19 a une résolution de l'ordre du dixième de la longueur d'onde.

Le premier sommateur 20 additionne les signaux issus des premières cellules de retard 19 de chaque élément de sonde 5 d'un groupe 6, après qu'ils aient été mis en phase par les retards appliqués à ceux-ci par les cellules de retard 19.

Chaque deuxième cellule de retard 21 comprend un deuxième circuit tampon circulaire 29. Chaque deuxième cellule de retard 21 gère les retards entre les groupes 6. Ces retards peuvent atteindre plusieurs centaines de longueurs d'onde. Chaque cellule de retard 21 est pilotée dynamiquement à l'écriture par un deuxième circuit mémoire 30 et un troisième interpolateur 31. Le deuxième circuit mémoire 30 stocke, pendant la phase d'initialisation du dispositif selon l'invention, les points caractéristiques de la courbe de retard de chaque groupe 6. Le troisième interpolateur 31 régénère les points intermédiaires aux points caractéristiques. La deuxième cellule de retard 21 fonctionne, comme la première cellule de retard 19, à la fréquence H/n.

La deuxième cellule de retard 21a une résolution de l'ordre du tiers de la longueur d'onde.

Le deuxième sommateur 22 additionne les signaux d'un groupe 6, avec les signaux provenant du groupe précédent.

La transmission des données pour sommation, par le deuxième sommateur 22, entre groupes 6, est effectuée par liaison série à haut débit au travers d'un sérialiseur 32 et d'un désérialiseur 32a. Avantageusement, ces liaisons série permettent d'acheminer des débits de l'ordre de 1,5Go/s. Avantageusement également, les désérialiseurs sont de type LVDS (LVDS est l'acronyme de l'expression anglo-saxonne « Low Voltage Differential Signaling » qui se traduit par « signalisation différentielle à basse tension »). Ces dispositions permettent de conserver tous les bits ajoutés par les premier 20 et deuxième 22 sommateurs et d'avoir ainsi une chaîne de traitement parfaitement linéaire, avec une dynamique de sortie comprise entre 96dB et 132dB, pour une sonde 1 de 8 à 2043 éléments de sonde 5.

Le signal issu de la sommation par le deuxième sommateur 22 se voit appliquer un gain par le circuit multiplieur 23. Le circuit multiplieur 23 est piloté dynamiquement par un troisième circuit mémoire 33 et un quatrième interpolateur 34. Le troisième circuit mémoire 33 stocke les points caractéristiques d'une courbe de gain. Cette courbe de gain a été stockée dans le troisième circuit mémoire 33 pendant la phase d'initialisation. Le quatrième interpolateur 34 génère les points intermédiaires entre les points caractéristiques de la courbe de gain stockés dans le troisième circuit mémoire 33.

Un cinquième interpolateur 35 numérique, à sortie parallèle, permet de retrouver la résolution temporelle du dixième de longueur d'onde sans augmenter la fréquence système H. Cette résolution est suffisante pour autoriser tous les traitements conventionnels effectués par des appareils classiques de contrôle et d'imagerie par ultrasons. Les données en sortie du cinquième interpolateur 35 sont traitées par les modules de traitement pour exploitation 24, 24a. Ces modules de traitement pour exploitation 24, 24a sont avantageusement respectivement du type "affichage des échos" (A-SCAN) et "mesures d'amplitudes et de distances dans une fenêtre de sélection" (GATES). Ces modules de traitement pour exploitation 24, 24a sont tout à fait conventionnels dans le domaine du contrôle non destructif et de l'imagerie par ultrasons.

Le signal résultant du traitement par les modules de traitement pour exploitation 24, 24a est envoyé par le processeur 9 et le multiplexeur de transfert 10, vers le module de base 2 suivant ou vers les moyens de traitement de données 4, via une liaison série à haut débit de type LVDS.

Dans l'exemple de dispositif selon l'invention décrit ci-dessus, les lois de retard de réception sont appliquées, d'une part, au niveau des premières cellules de retard 19 et, d'autre part, au niveau des deuxièmes cellules de retard 21. Ceci permet d'avoir :
- des premières cellules de retard 19 pouvant appliquer des retards égaux à, par exemple, quarante fois la longueur de l'onde émise dans le matériau, avec une relativement bonne résolution (par exemple de l'ordre du dixième de longueur d'onde) ; et
- des deuxièmes cellules de retard 21 pouvant appliquer des retards égaux à, par exemple, cent soixante fois la longueur de l'onde émise dans le matériau, avec une relativement faible résolution (par exemple de l'ordre du tiers de longueur d'onde).

Le dispositif selon l'invention permet la sommation de signaux déphasés de 0 à plusieurs centaines de longueurs d'onde, avec une résolution de l'ordre du dixième de longueur d'onde. On obtient, grâce au dispositif selon l'invention, des déviations du faisceau ultrasonore émis par la sonde 1 de 0 degré à plus ou moins 90 degrés, chaque déviation pouvant prendre n'importe quelle valeur dans cette plage indépendamment des valeurs des autres déviations. Le dispositif selon l'invention autorisant par ailleurs le codage fréquentiel des signaux émis pour chaque déviation, la discrimination des signaux reçus s'en trouve grandement améliorée.

A titre d'exemple, pour une sonde de 20MHz et donc une période de 50 nano-secondes, la gamme de déphasage est variable de 0 à environ 10 microsecondes, avec une résolution de cinq nano-secondes.

Les retards sont appliqués avec une précision suffisante pour que des points de sur-échantillonnage puissent être abandonnés, de façon à revenir au volume et à la fréquence de traitement des signaux, avant interpolation par le premier interpolateur 18.

L'exemple de mode de réalisation du dispositif présenté ci-dessus permet un fonctionnement totalement en temps réel. La cadence d'acquisition et de traitement ne dépend que du temps de parcours dans le matériau analysé, comme dans les systèmes de contrôle mono-voie classiques, ce qui autorise des cadences de plusieurs kilo-Hertz dans la majorité des applications. Ce dispositif ne comporte pas de mémoire d'acquisition, ce qui rend possible des durées de sondage importantes et non limitées, sans aucun surcoût de composants pour le dispositif d'analyse. Lorsque les conditions de contrôle ne nécessitent pas des cadences de plusieurs kilo-Hertz, le dispositif selon l'invention peut avantageusement être associé à un multiplexeur en tête qui permet de réduire sensiblement le coût global du dispositif d'analyse. Par ailleurs, l'utilisation de circuits de retards numériques, permet des déflexions angulaires nettement supérieures à celles obtenues avec les circuits analogiques. En effet, la précision des circuits numériques ne dépend pas de la valeur absolue du retard.

Le dispositif selon l'invention a un fonctionnement circulaire, c'est-à-dire que l'on peut démarrer et arrêter l'émission et la réception sur n'importe quel élément de sonde 5.

Le dispositif selon l'invention, décrit ci-dessus permet la mise en oeuvre de plusieurs procédés également conformes à la présente invention.

Selon un premier exemple de procédé selon l'invention, on émet une onde composite constituée de plusieurs signaux émis par l'ensemble des éléments de sonde 5 de la sonde 1, avec des lois de retard d'émission permettant l'émission simultanée de l'onde selon plusieurs déviations. Les circuits de retard 8 traitent alors les signaux correspondant à l'onde émise, réfractés par le matériau et recueillis par les éléments de sonde 5, en appliquant, à ces signaux, des lois de retard de réception correspondant aux différentes déviations.

Selon un deuxième exemple de procédé selon l'invention, on émet une onde composite constituée de plusieurs signaux émis simultanément par au moins deux zones différentes de la sonde 1 comprenant chacune plusieurs éléments de sonde 5. Chacune de ces zones balaye alors simultanément le matériau à analyser, en émettant l'onde selon plusieurs déviations. On traite alors les signaux réfractés par le matériau et recueillis par les éléments de sonde 5, zone par zone, en leur appliquant des lois de retard de réception correspondant aux différentes déviations de l'onde émise.

Ce deuxième exemple de procédé est particulièrement avantageux. En effet, par exemple en divisant la surface du matériau à analyser en quatre plages et en analysant chacune de ces plages avec une zone différente de la sonde 1, on divise par quatre la vitesse de balayage. Si on émet, avec chacune des zones, l'onde selon cinq déviations, on gagne un facteur vingt sur la vitesse de balayage du matériau à analyser par rapport à ce qui pouvait être obtenu avec les procédés et dispositifs de l'art antérieur.

Le dispositif et le procédé selon l'invention s'appliquent, non exclusivement, à tous les contrôles par ultrasons, à savoir, dans le domaine du contrôle non destructif, aux appareils portatifs et aux systèmes automatiques, et dans le domaine médical, aux appareils de diagnostic.

Le dispositif et le procédé selon l'invention s'appliquent également à tous les systèmes qui utilisent un capteur constitué d'une pluralité d'éléments indépendants, quel que soit le phénomène physique exploité : Courants de Foucault, infrasons, ondes électromagnétiques, etc.

Le dispositif et le procédé selon l'invention s'appliquent également à tous les capteurs multi-éléments, qu'ils soient linéaires, matriciels ou circulaires.

De nombreuses variantes du dispositif et du procédé selon l'invention peuvent être prévues aux modes de réalisation et de mise en oeuvre décrits ci-dessus, sans sortir du cadre de l'invention.

Ainsi, au lieu de traiter en temps réel les signaux recueillis par les éléments de sonde 5, il est possible de prévoir une mémoire tampon en amont des circuits de retard 8, pour enregistrer ces signaux en vue d'un traitement ultérieur par ces circuits de retard 8.

De même, on a décrit ci-dessus un dispositif comportant des groupes 6 de quatre éléments de sonde 5, émettant selon cinq déviations, mais les nombres de groupes 6, d'éléments de sonde 5 par groupe 6 et de déviations est variable et dépend des applications et/ou des performances des composants utilisés pour la fabrication du dispositif selon l'invention.

## Revendications

1. Dispositif d'analyse de la structure d'un matériau pour le contrôle non destructif de tôles, de tubes et de rails, comprenant :
- une sonde comportant une pluralité d'éléments de sonde (5) pour l'émission d'une onde à une longueur d'onde, dans le matériau, avec une loi de retard d'émission correspondant à une déviation selon une direction et une focalisation de cette onde, et la réception, en parallèle sur les différents éléments de sonde (5), de signaux provenant de la réfraction de cette onde par le matériau,
- une pluralité d'émetteurs (7), chaque émetteur (7) excitant un unique élément de sonde (5),
- une pluralité de voies de détection, chaque voie de détection étant connectée à un élément de sonde (5), pour recueillir les signaux de réfraction et les transmettre à des moyens de traitement de données (4),
- une pluralité de circuits de retard (8), chaque circuit de retard (8) appliquant un retard, sur chaque voie de détection, selon une loi de retard de réception prédéterminée correspondant à la déviation de l'onde émise, et dans lequel:
• chaque élément de sonde (5) émet l'onde avec au moins une autre loi de retard d'émission correspondant à l'émission de l'onde selon au moins une autre déviation, simultanément, et que
• les circuits de retard appliquent des retards, sur chaque voie de détection, selon au moins une autre loi de retard de réception, prédéterminée et correspondant à la réception de l'onde émise selon l'autre déviation, **caractérisé par le fait que** les circuits de retard (8) comprennent des premières (19) et deuxièmes (21) cellules de retard en série et deux circuits de sommation (20,22) pour sommer les signaux transmis, après application des retards respectivement par les premières (19) et deuxièmes (21) cellules de retard, et que :
- les premières cellules de retard (19) ont une première résolution,
- les premiers circuits de sommation (20) additionnant les signaux sortant des premières cellules de retard (19) d'un groupe (6) de plusieurs éléments de sonde (5) consécutifs,
- les deuxièmes cellules de retard (21) ont une deuxième résolution, inférieure à ladite première résolution, et retardent les signaux sortant du premier sommateur (20),
- les deuxièmes circuits de sommation (22) comprennent plusieurs deuxièmes sommateurs en cascade, chaque deuxième sommateur additionnant les signaux d'une deuxième cellule de retard et d'un autre deuxième sommateur précédent, de telle sorte que le dernier deuxième sommateur, fournisse un signal représentatif d'une déviation.

2. Dispositif selon la revendication 1, dans lequel les retards sont compris entre zéro et quarante fois la longueur d'onde avec une résolution de un dixième de la longueur d'onde.

3. Dispositif selon la revendication 1, dans lequel la déviation et l'autre déviation sont comprises entre zéro degré et plus ou moins 90 degrés.

4. Dispositif selon la revendication 1, comportant des moyens de pilotage des circuits de retard (8) aptes à piloter les circuits de retard (8) pour traiter chaque onde selon une focalisation variant en fonction du temps.

5. Dispositif selon l'une des revendications précédentes, comportant des moyens de numérisation (17) du signal recueilli par chacune des voies de détection, avec une fréquence d'échantillonnage comprise entre deux et cinq fois la fréquence d'émission des éléments de sonde (5), et préférentiellement sensiblement égale à trois fois la fréquence d'émission des éléments de sonde (5).

6. Dispositif selon l'une des revendications précédentes, comportant un interpolateur (18) numérique à sorties parallèles pour multiplier la résolution temporelle du signal recueilli par chacune des voies de détection.

7. Dispositif selon l'une des revendications précédentes, comportant un amplificateur linéaire pour amplifier l'amplitude de l'onde avant son émission par les éléments de sonde (5).

8. Dispositif selon l'une des revendications précédentes, dans lequel les éléments de sonde (5) sont agencés selon une disposition choisie parmi une disposition linéaire, une disposition matricielle et une disposition circulaire.

## Patentansprüche

1. Vorrichtung zur Strukturanalyse eines Materials zur zerstörungsfreien Prüfung von Blechen, Rohren und Schienen, umfassend:
- eine Sonde, umfassend eine Vielzahl von Sondenelementen (5) zum Senden einer Welle mit einer Wellenlänge in das Material mit einem Sendeverzögerungsgesetz entsprechend einer Abweichung in eine Richtung und einer Fokussierung dieser Welle, und zum parallelen Empfangen von Signalen, auf den verschiedenen Sondenelementen (5), die von der Brechung dieser Welle durch das Material kommen,
- eine Vielzahl von Sendern (7), wobei jeder Sender (7) ein einziges Sondenelement (5) erregt,
- eine Vielzahl von Erfassungswegen, wobei jeder Erfassungsweg an ein Sondenelement (5) angeschlossen ist, um die Brechungssignale zu sammeln und sie an Datenverarbeitungsmittel (4) zu übertragen,
- eine Vielzahl von Verzögerungsschaltungen (8), wobei jede Verzögerungsschaltung (8) eine Verzögerung an jedem Erfassungsweg nach einem vorbestimmten Empfangsverzögerungsgesetz entsprechend der Abweichung der ausgesandten Welle anwendet, und wobei:
* jedes Sondenelement (5) gleichzeitig die Welle mit mindestens einem anderen Sendeverzögerungsgesetz entsprechend dem Senden der Welle gemäß mindestens einer weiteren Abweichung aussendet, und
* die Verzögerungsschaltungen Verzögerungen an jedem Erfassungsweg nach mindestens einem weiteren vorbestimmten Empfangsverzögerungsgesetz und entsprechend dem Empfang der gemäß der anderen Abweichung ausgesandten Welle anwenden,
**dadurch gekennzeichnet, dass** die Verzögerungsschaltungen (8) erste (19) und zweite (21) Verzögerungszellen in Serie und zweite Summierschaltungen (20, 22) umfassen, um die übertragenen Signale nach Anwendung der Verzögerungen durch die ersten (19) und zweiten (21) Verzögerungszellen zu summieren, und dass:
- die ersten Verzögerungszellen (19) eine erste Auflösung haben,
- die ersten Summierschaltungen (20) die aus den ersten Verzögerungszellen (19) einer Gruppe (6) von mehreren aufeinanderfolgenden Sondenelementen (5) austretenden Signale addieren,
- die zweiten Verzögerungszellen (21) eine zweite Auflösung haben, die geringer als die erste Auflösung ist, und die aus dem ersten Summierer (20) austretenden Signale verzögern,
- die zweiten Summierschaltungen (22) mehrere zweite Summierer in Kaskade umfassen, wobei jeder zweite Summierer die Signale einer zweiten Verzögerungszelle und eines anderen zweiten vorhergehenden Summierers addiert, so dass der letzte zweite Summierer ein für eine Abweichung repräsentatives Signal liefert.

2. Vorrichtung nach Anspruch 1, bei der die Verzögerungen zwischen null und vierzigmal die Wellenlänge mit einer Auflösung von einem Zehntel der Wellenlänge enthalten sind.

3. Vorrichtung nach Anspruch 1, bei der die Abweichung und die andere Abweichung zwischen null Grad und mehr oder weniger 90 Grad enthalten sind.

4. Vorrichtung nach Anspruch 1, umfassend Mittel zur Steuerung der Verzögerungsschaltungen (8), die geeignet sind, die Verzögerungsschaltungen (8) zu steuern, um jede Welle gemäß einer zeitlich variierenden Fokussierung zu bearbeiten.

5. Vorrichtung nach einem der vorhergehenden Ansprüche, umfassend Mittel zur Digitalisierung (17) des von jedem der Erfassungswege eingeholten Signals mit einer Abtastfrequenz zwischen zwei- und fünfmal der Sendefrequenz der Sondenelemente (5) und vorzugsweise im Wesentlichen gleich dreimal der Sendefrequenz der Sondenelemente (5).

6. Vorrichtung nach einem der vorhergehenden Ansprüche, umfassend einen digitalen Interpolator (18) mit parallelen Ausgängen, um die zeitliche Auflösung des von jedem der Erfassungswege eingeholten Signals zu multiplizieren.

7. Vorrichtung nach einem der vorhergehenden Ansprüche, umfassend einen linearen Verstärker, um die Amplitude der Welle vor ihrem Senden durch die Sondenelemente (5) zu verstärken.

8. Vorrichtung nach einem der vorhergehenden Ansprüche, bei dem die Sondenelemente (5) in einer Anordnung angeordnet sind, die unter einer linearen Anordnung, einer Matrixanordnung und einer kreisförmigen Anordnung ausgewählt ist.

## Claims

1. A device for analyzing the structure of a material for the nondestructive inspection of sheet metal, tubes, track rails, comprising:
- a probe comprising a plurality of probe elements (5) for the emission of a wave at a wavelength, into the material, with an emission delay law corresponding to a deviation according to a direction and a focusing of this wave, and the reception, in parallel on the various probe elements (5), of signals originating from the refraction of this wave by the material,
- a plurality of emitters (7), each emitter (7) exciting a single probe element (5),
- a plurality of detection channels, each detection channel being connected to a probe element (5), so as to collect the refraction signals and transmit them to data processing means (4),
- a plurality of delay circuits (8), each delay circuit (8) applying a delay, to each detection channel, according to a predetermined reception delay law corresponding to the deviation of the wave emitted, and wherein:
• each probe element (5) emits the wave with at least one other emission delay law corresponding to the emission of the wave according to at least one other deviation, simultaneously, and that
• the delay circuits apply delays to each detection channel according to at least one other predetermined reception delay law corresponding to the reception of the wave emitted according to the other deviation,
**characterized in that** the delay circuits (8) comprise first delay cells (19) and second delay cells (21) in series and two summation circuits (20, 22) for summing the signals transmitted, after application of the delays respectively by the first (19) and second (21) delay cells, and that:
- the first delay cells (19) have a first resolution,
- the first summation circuits (20) adding the signals from the first delay cells (19) of a group (6) of several consecutive probe elements (5),
- the second delay cells (21) have a second resolution, lower than said first resolution, and delay the signals from the first summator (20),
- the second summation circuits (22) comprise a plurality of cascaded second summators, each second summator adding the signals from a second delay cell and from a previous other second summator, so as the second summator provides a signal corresponding to a deviation.

2. The device as claimed in claim 1, in which the delays are comprised between zero and forty times the wavelength with a resolution of one tenth of the wavelength.

3. The device as claimed in claim 1, in which the deviation and the other deviation are comprised between zero degree and plus or minus 90 degrees.

4. The device as claimed in claim 1, comprising means of driving the delay circuits (8) able to drive the delay circuits (8) so as to process each wave according to a focusing varying as a function of time.

5. The device as claimed in one of the preceding claims, comprising means of digitization (17) of the signal collected by each of the detection channels, with a sampling frequency lying between two and five times the frequency of emission of the probe elements (5), and preferably substantially equal to three times the frequency of emission of the probe elements (5).

6. The device as claimed in one of the preceding claims, comprising a digital interpolator (18) with parallel outputs for multiplying the temporal resolution of the signal collected by each of the detection channels.

7. The device as claimed in one of the preceding claims, comprising a linear amplifier for amplifying the amplitude of the wave prior to its emission by the probe elements (5).

8. The device as claimed in one of the preceding claims, in which the probe elements (5) are laid out according to an arrangement chosen from among a linear arrangement, a matrix arrangement and a circular arrangement.
